**Europäisches Patentamt**

**European Patent Office**

**Office européen des brevets**

(19)

(11) Publication number: **0 111 379**
**A1**

(12) # EUROPEAN PATENT APPLICATION

(21) Application number: **83201779.2**

(22) Date of filing: **14.12.83**

(51) Int. Cl.³: **C 02 F 9/00**
**C 02 F 1/24, C 02 F 3/02**

(30) Priority: **14.12.82 NL 8204829**

(43) Date of publication of application:
**20.06.84 Bulletin 84/25**

(84) Designated Contracting States:
**AT BE CH DE FR GB IT LI LU NL SE**

(71) Applicant: **Ingenieursbureau Schneider & Schuurman B.V.**
**Meniststraat 5**
**NL-7091 ZZ Dinxperlo(NL)**

(72) Inventor: **Schuurman, Bennie Johan**
**Bijvankspad 1**
**7091 TH Dinxperlo(NL)**

(72) Inventor: **Schneider, Joop**
**Aaldersbeeklaan 131**
**7091 EE Dinxperlo(NL)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

(54) **A method of, and apparatus for, purifying waste water.**

(57) A method of purifying wastewater wherein the water is filtered and subsequently supplied to a container comprising a sand collector, a skimmer and an aeration unit, in which container a first purification takes place, whereupon the treated water is aerated in an aeration tank and effects biological degradation by means of an active sludge mass and from that location is supplied to a flotation tank wherein the active sludge is separated, after which the purified wastewater is discharged to the sewer, surface water or the like, as well as an apparatus for performing said method.

EP 0 111 379 A1

Title: A method of, and an apparatus for, purifying wastewater.

The invention relates to a method of purifying wastewater, in particular wastewater from abattoir installations, fish and meat processing industries and the like, which wastewater has a very high pollution value. This wastewater is mostly mixed with solid components, including hair, fat and sand, which elements are highly disturbing factors in the purification. Moreover, the wastewater has an elevated temperature a few times a day, so that the dissolving power of e.g. fats is increased, thus impeding the contemplated separation and reducing the purification efficiency.

A method of purifying wastewater is known in which the water is filtered and subsequently supplied to a container comprising a sand collector, a skimmer and an aeration unit, in which container a first purification is carried out.

In practice, however, it has been found that water thus purified cannot be discharged, without anything more to the sewer and certainly not to surface water on account of its still too high pollution value. It is an object of the invention to remove this drawback.

To this end, the method is characterized in that the water treated in the said container, after having passed the said container, is aerated in an aeration tank functioning as a biological basin, and effects a biological degradation by means of an active sludge mass, and is supplied from that location to a flotation tank wherein the active sludge is separated, after which the sufficiently purified wastewater

0111379

-2-

is discharged to the sewer or to an open surface water.

For maintaining the degradation, at least a part of the active sludge mass may be continuously recycled from the flotation tank to the aeration tank.

A further possibility is that the first container comprising a sand collector, a skimmer and an aeration unit functions intermittently, e.g. at night, as a flotation tank. Such a method, however, is suitable only for the smaller installations As a result, the second container indicated in the above as flotation tank is superfluous, so that a substantial simplification is achieved. A condition for this, however, is that the capacities of the container and the aeration tank, considering the required purification and the quantity of wastewater offered, should permit such an intermittent method.

Since the method according to the invention allows to admit a much higher active sludge mass per m³ capacity of the aeration tank(s), and hence effects a much higher degradation per m³ capacity, the installation as such can have a proportionally smaller volume, so that also the energy consumption is lower.

The above advantages can never lead to the problems conventional in biological purification with too light flocks, which cannot or hardly be separated during a part of the year with the conventional separation methods.

The invention further relates to an apparatus for purifying wastewater, comprising a storage pit or reservoir, a wastewater filter communicating therewith and connected to a container comprising a sand collector, a skimmer, an aeration unit and a discharge conduit. The apparatus according to the invention is characterized in that the said discharge conduit is connected to at least one aeration tank which, in its turn, is connected to a flotation tank comprising a skimmer, an aeration unit and an discharge conduit.

The method according to the invention offers the possibility of discharging the polluted water obtained e.g. in five days of 10 hours a day in 7 days of 24 hours (in purified state), i.e. an hour load being only one third of the nominal hour load, with peaks being absent.

One embodiment of a wastewater purification installation according to the invention will now be described, by way of example, with reference to the accompanying diagrammatic drawing.

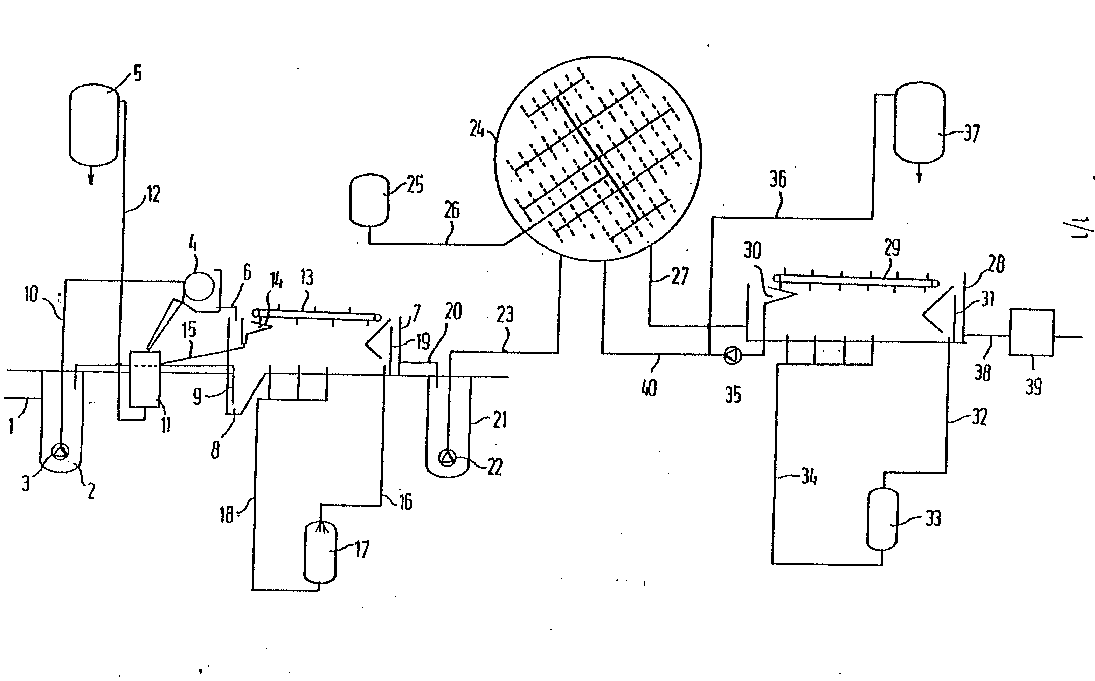

As shown in the drawing, a wastewater purification installation comprises a supply 1 terminating in a storage pit 2. The wastewater is supplied from the pit 2 to a rotating wastewater filter 4 by means of a pump 3 through a conduit 10. The dirt taken off by means of a scraper, not shown, is discharged, with interposition of a conveyor (e.g. a blowing tank 11) through a conduit 12 to a storage container 5, from which it can be discharged at intervals.

The wastewater having passed the filter 4 is supplied through a conduit 6 to a so-called micro-aerated fat collector 7. At the location where the conduit 6 terminates therein, this micro-aerated fat collector is provided at the bottom with a so-called sand collector 8. The sand collector is emptied at regular intervals by means of a conduit 9 fitted with a controlled valve, not shown, which conduit recycles the dirt meanwhile accumulated in the sand collector to the retention reservoir 2.

The micro-aerated fat collector is provided at the top with a rotating skimmer 13, by means of which the floating dirt is transported to a scum box 14, from which the dirt is likewise supplied to the conveyor 11 through a conduit 15. The micro-aerated fat collector further connects to a conduit 16, by means of which the polluted water is supplied to an aeration tank 17, from which the water is recycled through a conduit 18 back into the bottom portion of the micro-aerated fat collector 7.

The micro-aerated fat collector 7 further comprises an overflow baffle 19. Adjacent the overflow portion, the micro-aerated fat collector 7 connects to a conduit 20, which terminates in an intermediate storage container 21. From the intermediate storage container 21, the polluted water is supplied to an aeration tank 24 by means of a pump 22 and a conduit 23. A degradation process takes place in the said aeration tank by means of flocculation.

As shown in the drawing, the aeration of the aeration tank takes place from a blower space 25 through a conduit 26. From the aeration tank 24, the water, together with the active sludge, is supplied to a flotation tank 28 by means of a conduit 27.

The flotation tank 28 contains substantially the same elements as the micro-aerated fat collector 7, i.e. a skimmer 29, a scum box 30, an overflow baffle 31, a conduit 32, an aeration tank 33 and a return conduit 34. It is observed that therefore both in the flotation tank 28 and in the micro-aerated fat collector 7, the "dirt" is removed at least partly by flotation.

From the scum box 30, the active sludge mass is supplied by means of a pump 35 and a conduit 36 to an excess sludge storage tank 37, from which the excess sludge can be discharged at the desired

0111379

points of time, e.g. once a week, with a high dry matter content.

As further shown in the drawing, the conduit 36 comprises a branch 40 which leads to the aeration tank. The conduit 40 serves for continuously recycling active sludge mass separated in the flotation tank to the aeration tank, thus maintaining and promoting the degradation therein by flocculation.

The space of the flotation tank 28 defined by the overflow baffle 31 connects to a conduit 38, which is connected to the sewer or to the surface water by means of a measuring pit 39.

Although not shown in the drawing, it will be clear that the apparatus further comprises known per se elements, such as overflows, emergency overflows, oxygen sensors adapted to determine the oxygen content of the aeration tanks and, depending on the results, to actuate the blowers at the desired speed(s). Furthermore, various conduits may be provided with remote controlled valves and pumps.

It will also be clear that a great many modifications are possible with respect to the technical implementation within the scope of the invention.

## CLAIMS

1.       A method of purifying wastewater wherein the water is filtered and subsequently supplied to a container comprising a sand collector, a skimmer and an aeration unit, in which container a first purification takes place, characterized in that the water treated in the said container is aerated in an aeration tank after having passed the said container, and effects biological degradation by means of an active sludge mass and from that location is supplied to a flotation tank wherein the active sludge is separated, after which the purified wastewater is discharged to the sewer, surface water or the like.

2.       A method according to claim 1, characterized in that at least a part of the active sludge mass is continuously separated from the flotation tank and is recycled to the aeration tank.

3.       A method according to claim 1, characterized in that the container comprising a sand collector, a skimmer and an aeration unit is used intermittently as a flotation tank.

4.       An apparatus for purifying wastewater in the manner described in claim 1, 2 or 3, comprising a storage reservoir or pit, a wastewater filter connecting thereto and connected to a container comprising a sand collector, a skimmer, an aeration unit and a discharge conduit, characterized in that the discharge conduit is connected to at least one aeration tank connecting to a flotation tank comprising a skimmer, an aeration unit and a discharge conduit.

1/1

0111379

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | VOEDINGSMIDDELENTECHNOLOGIE, vol. 14, no. 17, 20th August 1981, page 31, Zeist, NL. "Fysisch-chemische afvalwaterbehandeling voor de voedingsmiddelenindustrie" * Page 31, columns 1,2 * | 1,4 | C 02 F 9/00 C 02 F 1/24 C 02 F 3/02 |
| Y | CHEMICAL ENGINEERING, vol. 82, no. 21, 6th October 1975, pages 49-61, McGraw-Hill, New York, USA L.D. LASH et al.: "Primary-waste-treatment methods" * Pages 57,58; figure F11 * | 1,4 | |
| Y | GB-A-2 013 646 (ITT INDUSTRIES) * Page 1, lines 54-61; page 2, lines 37-38; figure * | 1,2,4 | |

TECHNICAL FIELDS SEARCHED (Int. Cl. ³)

C 02 F

The present search report has been drawn up for all claims

| Place of search | Date of completion of the search | Examiner |
|---|---|---|
| THE HAGUE | 16-03-1984 | TEPLY J. |